(19) Europäisches Patentamt
European Patent Office
Office européen des brevets

(11) **EP 1 510 656 A1**

(12) **EUROPÄISCHE PATENTANMELDUNG**

(43) Veröffentlichungstag:
02.03.2005 Patentblatt 2005/09

(51) Int Cl.7: **F01D 17/08**, G01K 3/06

(21) Anmeldenummer: 03019868.3

(22) Anmeldetag: **01.09.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **SIEMENS AKTIENGESELLSCHAFT**
**80333 München (DE)**

(72) Erfinder: **Adam, Gottfried**
**53819 Neunkirchen-Seelscheid (DE)**

(54) **Verfahren und Vorrichtung zum Erkennen eines Betriebszustandes einer Turbine**

(57)    Es wird Verfahren zum Erkennen eines Betriebszustandes beim Betrieb einer Turbine (1) vorgestellt, bei dem ein heißes Abgas durch ein Abgasgehäuse (9) strömt und die Temperatur des Abgases im Abgasgehäuse (9) zeitaufgelöst erfasst wird. Um ein Verfahren zum Erkennen eines Betriebszustandes beim Betrieb einer Turbine (1) anzugeben, welches systematische Fehler erkennt und anzeigt, wird vorgeschlagen, dass die mehreren Temperaturmesswerte des Abgases bezogen auf einen Ursprung eines gedachten kartesischen Koordinatensystems jeweils ortsaufgelöst erfasst werden. Auschließend wird der Schwerpunkt der Temperaturverteilung bestimmt, wobei ein Vektor zwischen dem Ursprung des Koordinatensystems und dem Schwerpunkt der Temperaturverteilung als Indikator für den Betriebszustand der Turbine herangezogen wird.

FIG 2

**Beschreibung**

Die Erfindung betrifft ein Verfahren zum Erkennen eines Betriebszustandes beim Betrieb einer Turbine gemäss dem Oberbegriff des Anspruchs 1 und eine Vorrichtung zur Durchführung des Verfahrens gemäss dem Oberbegriff des Anspruchs 7.

Es ist bekannt, dass zum Erkennen eines Betriebszustandes einer Turbine die im Abgas herrschenden Temperaturen kontinuierlich erfasst und ausgewertet werden. Dafür sind an der Innenwand des Abgasgehäuses koaxial gleichmäßig verteilte Temperatur-Messeinrichtungen angeordnet, die die Temperaturen des Abgases erfassen. Zur Bewertung der gemessenen Abgastemperaturen werden Extremwertevergleiche durchgeführt. Für jede Messstelle wird im Probebetrieb die maximal aufgetretene und die minimal aufgetretene Temperatur erfasst und somit ein Temperaturintervall bestimmt. Eine Störung wird dann festgestellt, wenn das Temperatur-Messelement eine Temperatur erfasst, die außerhalb ihres vorher gemessenen Temperaturintervalls liegt.

Auch bekannt ist, dass aus dem zeitlichen Temperaturmittelwert einer Temperatur-Messeinrichtung und der momentanen Temperatur die Differenz bestimmt wird, um den Betriebszustand zu ermitteln.

Diese Bewertungen haben den Nachteil, dass kleine systematische Veränderungen der Austrittstemperaturen, welche unterhalb der vorgegebenen Limits liegen, unberücksichtigt bleiben.

Aufgabe der vorliegenden Erfindung ist es daher, ein Verfahren zum Erkennen eines Betriebszustandes beim Betrieb einer Turbine anzugeben, mit dem systematische Veränderungen des Betriebszustandes erkennbar und anzeigbar sind. Ferner ist es Aufgabe der Erfindung, eine dazu korrespondierende Vorrichtung anzugeben.

Die Lösung der auf das Verfahren gerichteten Aufgabe wird durch die Merkmale des Anspruchs 1 gelöst. Vorteilhafte Weiterbildungen sind in den Unteransprüchen angegeben.

Mit der Erfindung wird ein neuer Weg zum Erkennen eines Betriebszustandes beim Betrieb einer Turbine eingeschlagen. Bisher wurden im Abgaskanal an mehreren Positionen örtliche Temperaturmessungen vorgenommen, bei denen die Austrittstemperatur des Abgases erfasst wurde. Die örtliche Lage jeder erfassten Temperatur blieb dabei bisher unberücksichtig. Nun werden alle erfassten Temperaturen mit ihrer jeweils zugehörigen örtlichen Lage unter Momentbildung miteinander zu einer resultierenden Größe zusammengefasst, mittels der eine schnellere und genauere Erkennung von systematischen Veränderungen möglich ist.

Die Abgastemperaturen eines Zeitpunktes werden unter Berücksichtung des Ortes, an dem sie erfasst werden, in ein Koordinatensystem eingetragen. Danach wird jeder Temperaturmesswert auf die beiden Achsen des Koordinatensystems projiziert und somit jeweils in zwei senkrecht zueinander dabei jeweils entweder positiv oder negativ gerichtete Ortskomponenten zerlegt, wobei anschließend für jede Achse die gleichgerichteten Ortskomponenten komponentenweise bezogen auf einen jeweiligen Bezugswert unter Momentbildung zu zwei Momentsummen aufsummiert werden, wobei jeder Bezugswert so gewählt ist, dass die entgegengerichteten Momentsummen gleich groß sind, und dass danach ein aus den beiden Bezugswerten zusammengesetzter Punkt als Schwerpunkt der Austrittstemperaturverteilung zum Erkennen des Betriebszustandes der Gasturbine ausgewertet wird.

Durch die Nutzung der Gesamtinformationen der Austrittstemperaturverteilung werden die Informationen, die bisher unterhalb der Minimalbedingungen lagen, berücksichtigt.
Daraus ergibt sich ein höherer Informationsgehalt, der zur einer schnelleren und besseren Zustandserkennung genutzt wird.

In einer vorteilhaften Ausgestaltung wird der Betriebszustand während eines stationären Betriebes der Gasturbine als eine Störung erkannt, wenn der Schwerpunkt als Vektor mit Betrag und Winkel darstellbar ist, und wenn der aktuelle Betrag - oder Winkel -, des Schwerpunktvektors bezogen auf einen zu einem früheren Zeitpunkt bestimmten Betrag - oder Winkel -, eine Differenz aufweist, die einen Toleranzwert überschreitet bzw. unterschreitet. Es werden zwei zu unterschiedlichen Zeitpunkten erfasste Schwerpunkte miteinander verglichen, deren Differenz überwacht wird. Überschreitet die Differenz einen Toleranzwert, wird eine Störung des Betriebes der Turbine erkannt. Die Toleranzwerte werden durch Testbetriebe oder durch Erfahrungswerte ermittelt.

In umgekehrter Betrachtung kann ein ungestörter Betrieb der Gasturbine diagnostiziert werden, wenn der Schwerpunktvektor über die Zeit betrachtet konstant in Betrag und/oder Winkel bleibt.

Das zeitliche Verhalten des Betrages und des Winkels des Schwerpunktvektors - der Schwerpunkt der Austrittstemperaturverteilung - weist im Betrieb der Turbine ein bekanntes Verhalten auf:

Im störungsfreien Betrieb der Gasturbine schwingt sich der Schwerpunktvektor der Austrittstemperaturverteilung auf einen zeitlichen konstanten Betrag mit einem konstanten Winkel ein. Konstant bedeutet dabei, dass zwar innerhalb der durch Toleranzwerte vorgegebenen Schwankungsbreite geringe Änderungen auftreten können, die jedoch auf nicht systematische, sondern auf zufällige Einflüsse zurückzuführen sind.

Treten Laständerungen auf, sind diese ohne Einfluss auf den Betrag des Schwerpunktvektors, da der Betrag grundsätzlich eine Invarianz gegenüber Laständerungen aufweist.

Der Winkel des Schwerpunktvektors ist grundsätzlich abhängig von Laständerungen, da sich mit diesen ebenfalls der Heißgasmassenstrom und damit die Strömungsverhältnisse in der Turbine verändern. Die Veränderung des Heißgasmassenstromes erfolgt durch die Verstellungen der Verdichter-Vorleitschaufeln und/oder durch die Variation des zugeführten Brennstoffmassenstromes.

Die Veränderungen des Heißgasmassenstromes bewirken eine entsprechende Drehung der Austrittstemperaturverteilung. Dies ist jedoch nicht gleichbedeutend mit einer Störung, da diese Winkeländerung auf bekannte Eingriffe in den Betrieb der Gasturbine zurückzuführen ist.

Ändert sich während des stationären Betriebes der Turbine der Betrag oder der Winkel des Schwerpunktvektors wesentlich, so ist dies auf eine systematische Veränderung wie zum Beispiel auf die Kanalverblockung durch einen gelösten Hitzeschildstein zurückzuführen. Die systematischen Veränderungen sind auf einen fehlerbehafteten Betrieb oder auf eine Störung der Gasturbine zurückzuführen, da ein bekannter, äußerer Einfluss fehlt. Ferner führen Brennerstörungen, die Düsenverkokung einerseits oder eine veränderte Flammausrichtung andererseits sein können, zu einem sich verändernden Schwerpunkt der Austrittstemperaturverteilung. Gleichfalls können Strömungsfluktuationen, die sich in Temperaturfluktuationen niederschlagen, zu der Rotation des Winkels führen.

Zweckmäßigerweise ist eine Ebene, in der die Messstellen für die Temperatur-Messeinrichtungen liegen, senkrecht zur Hauptströmungsrichtung des Abgases ausgerichtet und die Hauptströmungsrichtung parallel zur Drehachse einer Welle der Turbine. Die Temperaturen werden demnach im identischen Abstand zur Drehachse der Welle zeitlich verfolgt.

In einer vorteilhaften Weiterbildung sind die Messstellen rotationssymmetrisch zur Drehachse angeordnet. Eine äquidistante Verteilung wird hierdurch erreicht, die wegen der Symmetrie besonders einfach auswertbar ist.

Generell ist das Verfahren für die ständige Überwachung des Betriebes geeignet. Dabei ist es ganz besonders vorteilhaft, wenn das Verfahren bevorzugt während des stationären oder quasi-stationären Betriebes der Turbine zu jedem Zeitpunkt d.h. kontinuierlich angewendet wird, da das Verfahren hier besonders zuverlässige Resultate liefert. Die Zustandsanalyse des Gasturbinenbetriebes mit Hilfe des Schwerpunktvektors ist jedoch prinzipiell auch in einem stark transienten Betrieb - unter geeigneten Modifikationen - durchführbar, wobei es im transienten Betrieb Besonderheiten zu berücksichtigen gilt. Zuverlässige Ergebnisse und Aussagen über das Verhalten der Gasturbine bei Durchlaufen eines transienten Betriebszustands, z.B. Anfahrvorgänge und Abfahrvorgänge, können mithin im Detail untersucht werden.

Zweckmäßigerweise ist die Turbine als Gasturbine ausgebildet.

Die auf die Vorrichtung gerichtete Aufgabe wird durch die Merkmale des Anspruchs 7 gelöst. Vorteilhafte Weiterbildungen sind in den Unteransprüchen angegeben.

Jede Temperatur-Messeinrichtung ist mit einem Eingang einer einzigen Auswerteeinrichtung verbunden, mit der ein Betriebszustand charakterisierbar ist. In der Auswerteeinrichtung wird dann das beschriebene Verfahren durchgeführt, so dass am Ausgang der Auswerteeinrichtung demgemäss ein Signal für den Betriebszustand anzeigbar ist. Daher weist die Auswerteeinrichtung Mittel zur Aufnahme der erfassten Temperatur und Mittel zur Kenntlichmachung des Betriebszustandes auf.

In einer vorteilhaften Weiterbildung steht eine Ebene, in der die Temperatur-Messeinrichtungen vorgesehen sind, quer zur Hauptströmungsrichtung des Abgases, welche parallel zur Drehachse einer Welle der Turbine verläuft. Die in der Ebene liegenden Temperatur-Messeinrichtungen sind an der Innenwand des Abgasgehäuses vorgesehen, so dass alle örtlichen Temperaturmesswerte im gleichen Abstand zur Drehachse der Welle erfasst. Dadurch werden identische Bedingungen für die Temperatur-Messeinrichtungen geschaffen; eine Gewichtung einzelner Temperaturmesswerte ist nicht erforderlich.

Zweckmäßigerweise sind die örtlichen Temperaturmesswerte rotationssymmetrisch zur Drehachse erfassbar.

Wenn die Turbine eine Ringbrennkammer aufweist, an der eine Anzahl von Brennern vorgesehen ist und die Anzahl der Brenner gleich der Anzahl von Temperatur-Messeinrichtungen ist, kann eine Relation von Brennern zur im Abgaskanal gemessenen Abgastemperatur hergestellt werden.

Weist die Turbine eine Anzahl von Brennkammern mit jeweils einem Brenner auf, so kann eine Relation von Brennern zur im Abgaskanal gemessenen Abgastemperatur auch über eine Anzahl von Temperatur-Messeinrichtungen erreicht werden, wenn diese der Anzahl von Brennkammern entspricht.

Vorteilhafterweise ist die Turbine als Gasturbine ausgebildet.

Die Erfindung wird anhand einer Zeichnung näher erläutert. Dabei zeigen:

Figur 1     eine Gasturbine in einem Längsteilschnitt,

Figur 2     ein kartesisches Koordinatensystem mit einem Diagramm der Austrittstemperaturverteilung,

Figur 3     ein kombiniertes Betrag-Zeit und Winkel-Zeit-Diagramm für einen Schwerpunktvektor der Austrittstemperaturverteilung der Gasturbine und

Figur 4     eine Auswerteeinrichtung für das Überwachungsverfahren

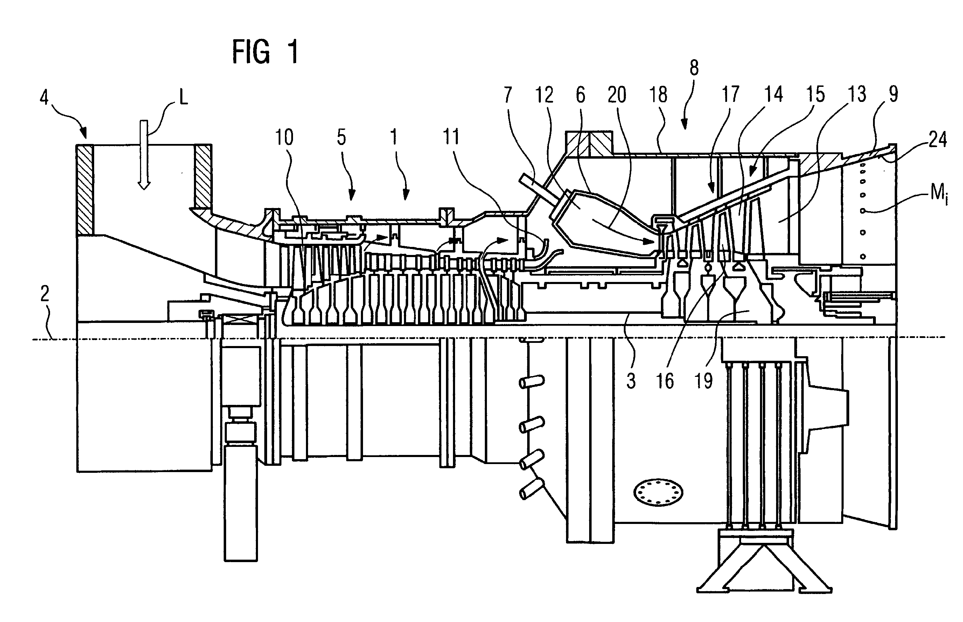

Die Figur 1 zeigt eine Gasturbine 1 in einem Längsteilschnitt. Sie weist im Inneren einen um eine Rotationsachse 2 drehgelagerten Rotor 3 auf, der auch als Turbinenläufer oder Rotorwelle bezeichnet wird. Entlang des Rotors 3 folgen ein Ansauggehäuse 4, ein Verdichter 5, eine torusartige Ringbrennkammer 6 mit mehreren koaxial angeordneten Brennern 7, eine Turbine 8 und ein Abgasgehäuse 9 aufeinander.

Im Verdichter 5 ist ein ringförmiger Verdichterkanal 10 vorgesehen, der sich in Richtung der Ringbrennkammer 6 im Querschnitt verjüngt. Am brennkammerseitigen Ausgang des Verdichters 5 ist ein Diffusor 11 angeordnet, der mit der Ringbrennkammer 6 in Strömungsverbindung steht. Die Ringbrennkammer 6 bildet einen Verbrennungsraum 12 für ein Gemisch aus einem Brennstoff und verdichteter Luft L. Ein Heißgaskanal 13 ist mit dem Verbrennungsraum 12 in Strömungsverbindung, wobei dem Heißgaskanal 13 das Abgasgehäuse 9 nachgeordnet ist.

Im Verdichterkanal 10 und im Heißgaskanal 13 sind jeweils alternierend Schaufelringe angeordnet. Einem aus Leitschaufeln 14 gebildeter Leitschaufelring 15 folgt jeweils ein aus Laufschaufeln 16 geformte Laufschaufelring 17. Die feststehenden Leitschaufeln 14 sind dabei mit dem Stator 18 verbunden, wo hingegen die Laufschaufeln 16 am Rotor 3 mittels einer Turbinenscheibe 19 befestigt sind.

Der Abgaskanal 9 wird durch eine zur Rotationsachse 2 konzentrische Innenwand 24 begrenzt, an der drehfest vierundzwanzig Temperatur-Messeinrichtungen $M_i$ über den Umfang gleichverteilt angeordnet sind. Alle Temperatur-Messeinrichtung $M_i$ liegen dabei in einer gedachten Ebene, die senkrecht zur Rotationsachse 2 steht.

Während des Betriebes der Gasturbine 1 wird vom Verdichter 5 durch das Ansauggehäuse 4 Luft L angesaugt und im Verdichterkanal 10 verdichtet. Die am brennerseitigen Ausgang des Verdichters 5 bereitgestellt Luft L wird durch den Diffusor 11 zu den Brennern 7 geführt und dort mit einem Brennstoff vermischt. Das Gemisch wird dann unter Bildung eines Arbeitsfluids 20 im Verbrennungsraum 10 verbrannt. Von dort aus strömt das Arbeitsfluid 20 in den Heißgaskanal 13. An den in der Turbine 8 angeordneten Leitschaufeln 16 und an den Laufschaufeln 18 entspannt sich das Arbeitsfluid 20 impulsübertragend, so dass der Rotor 3 angetrieben wird und mit ihm eine an ihn angekoppelte Arbeitsmaschine (nicht dargestellt). Im Abgaskanal 9 wird das Arbeitsfluid 20 als Abgas weitergeleitet. Jede Temperatur-Messeinrichtung $M_i$ misst dann die an ihrem Ort herrschende Temperatur $T_i$ des Abgases.

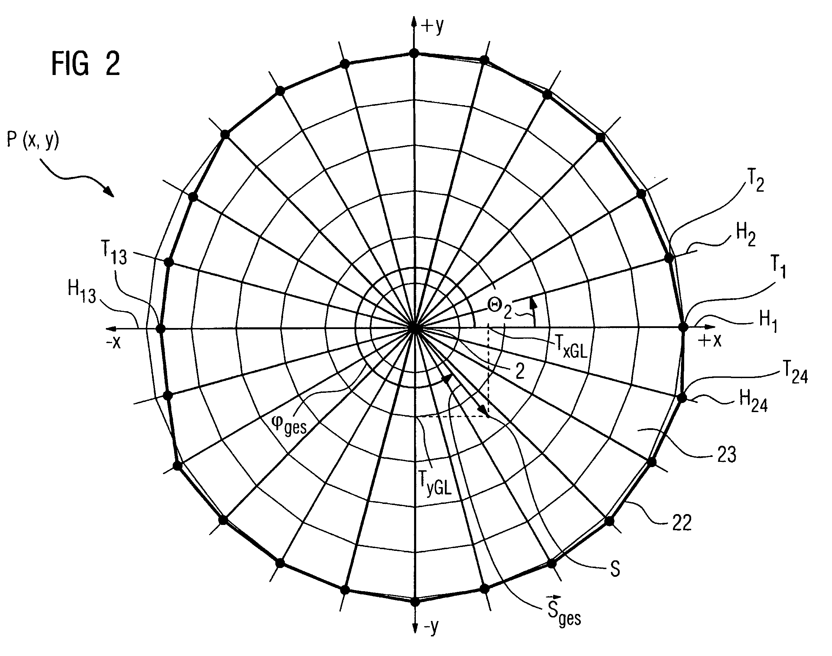

Figur 2 zeigt ein kartesisches Koordinaten-System P($x,y$) mit einer Austrittstemperaturverteilung zu einem Zeitpunkt $t_0$.

Es wird definiert:

P(x,y) :=  ein in der Ebene liegendes kartesisches Koordinaten-System, das von der Rotationsachse 2 im Koordinatenursprung P(0,0) senkrecht geschnitten wird

$M_i$ :=  die Temperatur-Messeinrichtungen, deren Messstellen in der Ebene liegen

n :=  24, die Anzahl der Temperatur-Messeinrichtungen,

$T_i$ : =  Temperatur der Temperatur-Messeinrichtung $M_i$, für i=1..n

Im Koordinatensystem P(x,y) erstrecken sich strahlenförmig vom Koordinatenursprung P(0,0) vierundzwanzig Hilfsgeraden $H_i$, für i=1..n, zu jeder Messstelle der Temperatur-Messeinrichtungen $M_i$. Somit weist jede Hilfsgerade $H_i$ bezogen auf die positive x-Achse einen Winkel $\Theta_i$ auf, dessen Wert 15° oder ein ganzzahliges Vielfaches davon beträgt.

Für jede von den Temperatur-Messeinrichtungen $M_i$ erfasste Temperatur $T_i$ wird auf ihrer zugehörigen Hilfsachse $H_i$ ein Punkt eingetragen, dessen Abstand vom Koordinatenursprung P (0,0) proportional zum erfassten Betrag der Temperatur $T_i$ ist. Somit ergibt sich auf jeder Hilfsachse $H_i$, i=1..n, ein von der örtlichen Temperatur $T_i$ abhängiger Punkt. Für jeden Punkt erfolgt dann mittels der bekannten trigonometrischen Funktionen gemäß

$$T_{x_i} = T_i \cdot \cos(\Theta_i), \text{ für i=1..24} \tag{1}$$

$$T_{y_i} = T_i \cdot \sin(\Theta_i), \text{ für i=1..24} \tag{2}$$

eine Projektionen auf die beiden Achsen des Koordinatensystems.

Um eine identische Gewichtung aller ermittelten Temperaturen $T_i$ zu erzielen, sind die Temperatur-Messeinrichtungen $M_i$ alle in einer Ebene liegend angeordnet, die sich senkrecht zur Drehachse 2 und damit gleichzeitig zur Hauptströmungsrichtung des Abgases sich erstreckt. Eine andere ungleichmäßige Verteilung der Temperatur-Messeinrichtungen $M_i$ über den Umfang wäre ebenfalls mit dem Verfahren durchführbar.

Um einen Schwerpunkt S der Austrittstemperaturverteilung des Abgases bestimmen zu können, müssen die Momente der einzelnen Temperaturen $T_i$ um den Schwerpunkt S herum im Gleichgewicht stehen. Bei der komponentenweisen Betrachtung, d.h. für jede Achse des Koordinatensystems in jede Richtung, müssen demgemäss jeweils die Summen der entgegengesetzt gerichteten Momente gemäß

$$\sum_{i=1}^{6} M_{+x_i} + \sum_{i=19}^{24} M_{+x_i} = \sum_{i=13}^{24} M_{-x_i} \qquad (3)$$

und

$$\sum_{i=1}^{12} M_{+y_i} = \sum_{i=13}^{24} M_{-y_i} \qquad (4)$$

im Gleichgewicht sein. Jedes einzelne Moment berechnet sich aus einem im Schwerpunkt S gelagerten Hebelarm, der mit der am Hebelarm wirkenden Komponente multipliziert wird. Da der Schwerpunkt vorerst unbekannt ist, berechnen sich die Momente im Koordinatensystem auf einen Bezugswert $T_{GL}$ komponentenweise nach

$$M_{+x_i} = (T_{+x_i} - T_{xGL}) \cdot T_{+x_i} \qquad (5)$$

$$M_{-x_i} = (T_{-x_i} + T_{xGL}) \cdot T_{-x_i} \qquad (6)$$

$$M_{+y_i} = (T_{+y_i} - T_{yGL}) \cdot T_{+y_i} \qquad (7)$$

$$M_{-y_i} = (T_{-y_i} + T_{yGL}) \cdot T_{-y_i} \qquad (8).$$

Zur Berechnung des Schwerpunktes $S$ werden die Gleichungen (5) und (6) in Gleichung (3) und die Gleichungen (7) und (8) in Gleichung (4) eingesetzt und umgeformt, so dass der Bezugswert der x-Achse sich nach

$$T_{xGL} = \frac{\sum_{i=1}^{6} T_{+x_i}^2 + \sum_{i=19}^{24} T_{+x_i}^2 - \sum_{i=7}^{18} T_{-x_i}^2}{\sum_{i=1}^{6} T_{+x_i} + \sum_{i=7}^{18} T_{-x_i} + \sum_{i=19}^{24} T_{+x_i}} \qquad (9)$$

bestimmen lässt, und der der y-Achse nach

$$T_{yGL} = \frac{\sum_{i=1}^{12} T_{+y_i}^2 - \sum_{i=13}^{24} T_{-y_i}^2}{\sum_{i=1}^{12} T_{+y_i} + \sum_{i=13}^{24} T_{-y_i}} \qquad (10).$$

Die beiden Bezugswerte lassen sich dann als einen Schwerpunktvektor $\vec{S}_{ges}$ gemäß Betrag

$$\left| \vec{S}_{ges} \right| = \sqrt{T_{xGL}^2 + T_{yGL}^2} \qquad (11)$$

und Winkel

$$\varphi_{ges} = \tan\left(\frac{T_{yGL}}{T_{xGL}}\right) \tag{12}$$

zusammenfassen. Der Ursprung des Schwerpunktvektors, $\vec{S}_{ges}$ liegt dabei im Koordinatenursprung P(0, 0) und endet im Schwerpunkt S, der im Punkt P($T_{xGL}$, $T_{yGL}$) liegt. Der Winkel $\varphi_{ges}$ wird auf die positive x-Achse im mathematisch positiven Sinn bezogen, wobei bei der Anwendung der Tangens-Funktion die üblichen Überlegungen zur Größe des Winkels $\varphi_{ges}$ anzuwenden sind.

Zeitaufgelöst - d.h. immer wiederkehrend werden alle ermittelten Temperaturen $T_i$ gemäss der obigen Rechnung zu einem Schwerpunktvektor $\vec{S}_{ges}$ zusammengefasst.

In Figur 2 sind die Punkte der auf den Hilfsachsen $H_i$ eingetragenen Temperaturen $T_i$ über eine Umfangslinie 22 miteinander verbunden, so dass sie gemeinsam eine vieleckige, fast kreisförmige Fläche 23 einschließen, deren Schwerpunkt S durch Anwendung des Verfahrens bestimmt wird.

Für eine ideale Gasturbine 1 mit einer symmetrischen Austrittstemperaturverteilung müsste sich als Schwerpunktvektor $\vec{S}_{ges}$ der Nullvektor ergeben.

Vergrößert sich der Betrag $|\vec{S}_{ges}|$ des Schwerpunktvektors $\vec{S}_{ges}$ wesentlich, so deformiert sich die Austrittstemperaturverteilung bezogen auf den Ursprung des Koordinatensystems zunehmend. Verkleinert sich der Betrag $|\vec{S}_{ges}|$, so wird die Austrittstemperaturverteilung symmetrischer.

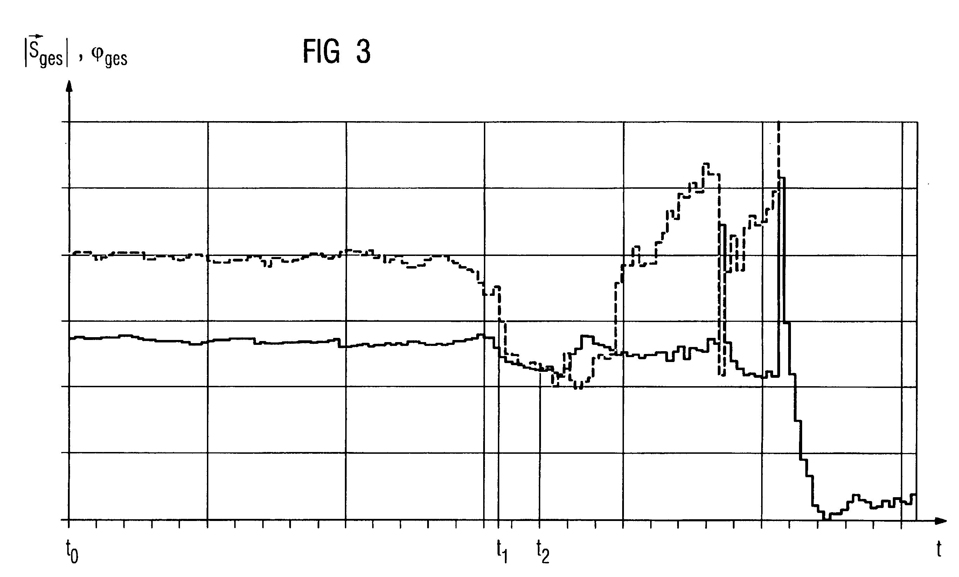

In Figur 3 ist der zeitliche Verlauf des Schwerpunktvektors $\vec{S}_{ges}$ in einem kombinierten Betrag-Zeit- und Winkel-Zeit-Diagramm dargestellt. Der Schwerpunktvektor $\vec{S}_{ges}$ wird durch den Betrag $|\vec{S}_{ges}|$ und den Winkel $\varphi_{ges}$ beschrieben, wobei der Winkel $\varphi_{ges}$ in einer gestrichelten Linienart und der Betrag $|\vec{S}_{ges}|$ als Volllinie dargestellt ist.

Im stationären ungestörten Betrieb der Gasturbine ab dem Zeitpunkt t=$t_0$ bis zum Zeitpunkt t=$t_1$ verläuft die Kennlinie des Betrages $|\vec{S}_{ges}|$ annähernd konstant innerhalb einer geringen Schwankungsbreite. Ebenso ist der Winkel $\varphi_{ges}$ innerhalb einer geringen Schwankungsbreite als konstant zu betrachten.

Zum Zeitpunkt t=$t_1$ tritt während des stationären Betriebs durch eine Teilblockade des Turbineneintrittraums eine systematische Veränderung ein, die mittels des Verfahren erkannt wird.

Ab dem Zeitpunkt t=$t_1$ ändert sich der Winkel $\varphi_{ges}$ wesentlich und sinkt ungefähr auf die Hälfte seines vorherigen Wertes ab. Der Betrag $|\vec{S}_{ges}|$ bewegt sich ab dem Zeitpunkt t=$t_2$ außerhalb seiner Schwankungsbreite. Durch die nicht geringfügige Änderung des Winkels $\varphi_{ges}$ und des Betrages $|\vec{S}_{ges}|$ ist die Störung frühzeitiger und leichter erkennbar.

Mit den bisher aus dem Stand der Technik bekannten Überwachungsverfahren sind zwar die Temperaturänderungen notiert worden, jedoch überschritten die geringen systematischen Temperaturänderungen nicht die Grenzwerte, so dass kein fehlerhafter Betrieb diagnostiziert wurde. Daher wurde dieser Störfall - die Teilblockade des Turbineneintrittraums mit daraus resultierender Oszillationsanregungen der ersten Laufschaufelreihe und anschließenden Schaufelbrüchen - nicht früh genug erkannt.

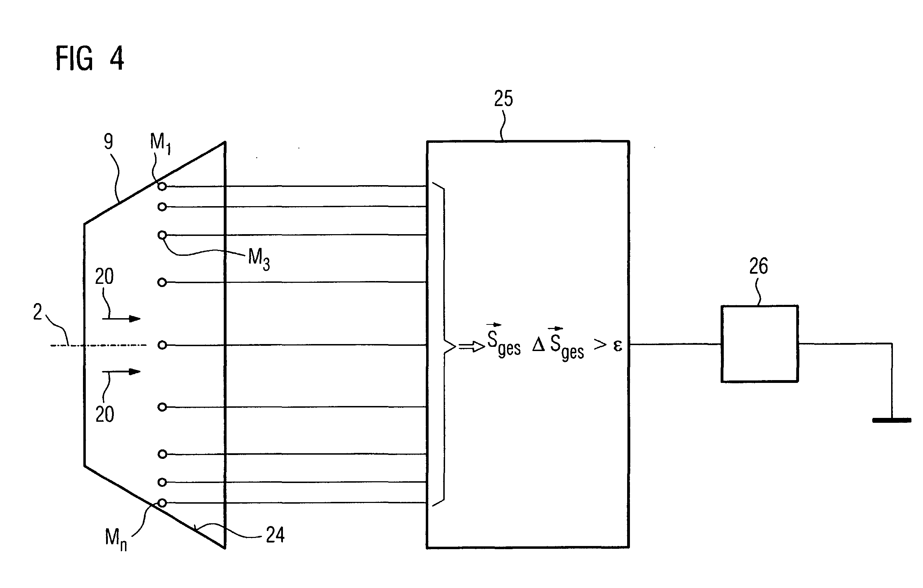

In Figur 4 ist die Vorrichtung zum Überwachen des Schwerpunktvektors $\vec{S}_{ges}$ gezeigt. Sie weist eine Auswerteeinrichtung 25 auf, die das Verfahren anwendet. Dabei ist die Auswerteeinrichtung 25 mit sämtlichen Temperatur-Messeinrichtungen $M_i$ und mit einer Anzeigeeinrichtung 26 verbunden. Aus den erfassten Temperaturen $T_i$ berechnet die Auswerteeinrichtung 25 den Schwerpunktvektors $\vec{S}_{ges}$ und überprüft, ob dessen Betrag $|\vec{S}_{ges}|$ oder dessen Winkel $\varphi_{ges}$ außerhalb eines Toleranzintervalls liegt. Ist dies der Fall, generiert die Auswerteeinrichtung 25 ein Signal für die Anzeigeeinrichtung 26, die dann als Betriebszustand eine Störung angezeigt. Die Anzeigeeinrichtung 26 kann ein Monitor oder eine Kontrolllampe sein.

Durch die stetige Überwachung des Betrages $|\vec{S}_{ges}|$ und des Winkels $\varphi_{ges}$ kann deren zeitliche Änderung bei fehlen eines äußeren bekannten Einflusses als eine systematische Veränderung frühzeitig erkannt werden. Diese weisen dann frühzeitiger auf Fehler oder Störungen hin, so dass Folgeschäden an der Gasturbine vermieden werden können, bzw. so dass ein rechtzeitiger Eingriff in den Betrieb der Turbine zur Korrektur erfolgen kann.

**Patentansprüche**

1. Verfahren zum Erkennen eines Betriebszustandes beim Betrieb einer Turbine (1), bei dem ein heißes Abgas durch ein der Turbine (1) nachgeschaltetes Abgasgehäuse (9) strömt und die Temperatur des Abgases im Abgasgehäuse (9) zeitaufgelöst erfasst wird, **dadurch gekennzeichnet, dass**

in einer Ebene quer zur Hauptströmungsrichtung des Abgases eine Anzahl von Temperaturmesswerten des Abgases bezogen auf einen Ursprung eines gedachten kartesischen Koordinatensystems jeweils ortsaufgelöst erfasst wird,

dass die Temperaturmesswerte auf die beiden Achsen des Koordinatensystems projiziert und somit jeweils in zwei senkrecht zueinander dabei jeweils entweder positiv oder negativ gerichtete Ortskomponenten zerlegt werden, wobei für jede Achse die gleichgerichteten Ortskomponenten anschließend komponentenweise bezogen auf einen jeweiligen Bezugswert unter Momentbildung zu zwei Momentsummen aufsummiert werden, wobei jeder Bezugswert so gewählt ist, dass die entgegengerichteten Momentsummen gleich groß sind, und

dass danach ein aus den beiden Bezugswerten zusammengesetzter Punkt als Schwerpunkt der Temperaturverteilung zum Erkennen des Betriebszustandes ausgewertet wird.

**2.** Verfahren nach Anspruch 1
**dadurch gekennzeichnet,**
**dass** der Schwerpunkt als Vektor mit Betrag und Winkel darstellbar ist, und dass der Betriebszustand als eine Störung erkannt wird, wenn der aktuelle Betrag - oder Winkel - des Schwerpunktvektors bezogen auf einen eines zu einem früheren Zeitpunkt gemessenen Betrag eine Differenz aufweist, die einen Toleranzwert überschreitet.

**3.** Verfahren nach Anspruch 1 oder 2,
**dadurch gekennzeichnet, dass**
die Ebene senkrecht zur Hauptströmungsrichtung des Abgases steht und die Hauptströmungsrichtung parallel zur Drehachse (2) einer welle der Turbine (1) verläuft.

**4.** Verfahren nach Anspruch 1, 2 oder 3,
**dadurch gekennzeichnet, dass**
alle örtlichen Temperaturmesswerte im gleichen Abstand zur Drehachse (2) der Welle erfasst werden.

**5.** Verfahren nach einem der vorherigen Ansprüche,
**dadurch gekennzeichnet, dass**
die örtlichen Temperaturmesswerte rotationssymmetrisch zur Drehachse (2) erfasst werden.

**6.** Verfahren nach einem der vorherigen Ansprüche,
**dadurch gekennzeichnet, dass**
es während des stationären Betriebes der Turbine (1) angewendet wird.

**7.** Vorrichtung zur Durchführung des Verfahrens nach einem der Ansprüche 1 bis 6,
bei der eine Anzahl von Temperatur-Messeinrichtungen (T) in einem Abgasgehäuse (9) einer Turbine (1) in einer Ebene quer zur Strömungsrichtung des Abgases angeordnet sind, mit denen lokal ein jeweiliger Temperaturmesswert zeitaufgelöst erfassbar ist,
**dadurch gekennzeichnet, dass**
jede Temperatur-Messeinrichtung (T) mit einem Eingang einer Auswerteeinrichtung (25) verbunden ist, mit der ein Betriebszustand charakterisierbar ist, und dass an einem Ausgang der Auswerteeinrichtung (25) ein Signal für den Betriebszustand anzeigbar ist.

**8.** Vorrichtung nach Anspruch 7,
**dadurch gekennzeichnet, dass**
die Ebene quer zur Hauptströmungsrichtung des Abgases steht, die Hauptströmungsrichtung parallel zur Drehachse (2) einer Welle der Turbine (1) ist,
dass alle örtlichen Temperaturmesswerte im gleichen Abstand zur Drehachse (2) der Welle erfassbar sind.

**9.** Vorrichtung nach Anspruch 7 oder 8,
**dadurch gekennzeichnet, dass**
die örtlichen Temperaturmesswerte rotationssymmetrisch zur Drehachse (2) erfassbar sind.

**10.** Vorrichtung nach Anspruch 7, 8 oder 9,
**dadurch gekennzeichnet, dass**
die Turbine (1) eine Ringbrennkammer (6) aufweist, an der eine Anzahl von Brennern (7) vorgesehen ist, und dass die Anzahl von Brennern (7) gleich der Anzahl von Messelementen ist.

**11.** Vorrichtung nach Anspruch 7, 8 oder 9,
**dadurch gekennzeichnet, dass**
die Turbine (1) eine Anzahl von Brennkammern (6) mit jeweils einem Brenner (7) aufweist, und dass die Anzahl von Brennkammern (6) gleich der Anzahl von Messelementen ist.

**12.** Vorrichtung nach einem der Ansprüche 1 bis 11,
**dadurch gekennzeichnet, dass**
die Turbine (1) als Gasturbine ausgebildet ist.

FIG 1

FIG 2

FIG 3

$|\vec{S}_{ges}|$ , $\varphi_{ges}$

$t_0$   $t_1$   $t_2$   t

EP 1 510 656 A1

FIG 4

**Europäisches Patentamt**

## EUROPÄISCHER RECHERCHENBERICHT

Nummer der Anmeldung

EP 03 01 9868

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2002/183916 A1 (CLEARY MARK JAMES) 5. Dezember 2002 (2002-12-05) | 7-9,12 | F01D17/08 G01K3/06 |
| Y | * Absatz [0018] - Absatz [0024] * | 1-6,10, 11 | |
| | * Abbildungen 1,2 * --- | | |
| Y | EP 1 118 920 A (GEN ELECTRIC) 25. Juli 2001 (2001-07-25) * Absatz [0012] - Absatz [0023] * * Abbildung 1 * --- | 1-6 | |
| X | PATENT ABSTRACTS OF JAPAN vol. 014, no. 237 (M-0976), 21. Mai 1990 (1990-05-21) -& JP 02 064232 A (HITACHI LTD), 5. März 1990 (1990-03-05) * Zusammenfassung * --- | 7,9,12 | |
| Y | US 5 878 566 A (SATO ISAO  ET AL) 9. März 1999 (1999-03-09) | 10,11 | |
| A | * Spalte 5, Zeile 59 - Spalte 6, Zeile 14 * --- | 3-6 | RECHERCHIERTE SACHGEBIETE (Int.Cl.7) F01D G01K |
| A | GB 989 011 A (BBC BROWN BOVERI & CIE) 14. April 1965 (1965-04-14) * Seite 1, Zeile 67 - Seite 2, Zeile 8 * --- | 7-12 | |
| A | DE 198 21 956 A (DEUTSCH ZENTR LUFT & RAUMFAHRT) 18. November 1999 (1999-11-18) * das ganze Dokument * ----- | 1-12 | |

Der vorliegende Recherchenbericht wurde für alle Patentansprüche erstellt

| Recherchenort | Abschlußdatum der Recherche | Prüfer |
|---|---|---|
| DEN HAAG | 9. Februar 2004 | Steinhauser, U |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder  Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**EP 1 510 656 A1**

**ANHANG ZUM EUROPÄISCHEN RECHERCHENBERICHT
ÜBER DIE EUROPÄISCHE PATENTANMELDUNG NR.**

EP 03 01 9868

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-02-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 2002183916 | A1 | 05-12-2002 | US | 6460346 B1 | 08-10-2002 |
| EP 1118920 | A | 25-07-2001 | US | 6505143 B1 | 07-01-2003 |
| | | | CZ | 20003380 A3 | 13-02-2002 |
| | | | EP | 1118920 A1 | 25-07-2001 |
| | | | JP | 2001201433 A | 27-07-2001 |
| JP 02064232 | A | 05-03-1990 | KEINE | | |
| US 5878566 | A | 09-03-1999 | JP | 8158893 A | 18-06-1996 |
| GB 989011 | A | 14-04-1965 | AT | 248148 B | 11-07-1966 |
| | | | CH | 390947 A | 30-04-1965 |
| | | | DE | 1698476 B1 | 11-12-1969 |
| DE 19821956 | A | 18-11-1999 | DE | 19821956 A1 | 18-11-1999 |
| | | | DE | 59904131 D1 | 06-03-2003 |
| | | | EP | 0959341 A1 | 24-11-1999 |
| | | | US | 6271522 B1 | 07-08-2001 |

EPO FORM P0461

Für nähere Einzelheiten zu diesem Anhang : siehe Amtsblatt des Europäischen Patentamts, Nr.12/82